# EUROPEAN PATENT APPLICATION

(11) **EP 1 912 094 A1**
(43) Date of publication of application: **16.04.2008**
(21) Application number: 07019445.1
(22) Date of filing: 04.10.2007
(51) Int. Cl.: G02F 1/13357

(54) **Backlight assembly and display apparatus having the same**

(30) Priority: 09.10.2006 KR 20060097787; 13.04.2007 KR 20070036592
(71) Applicant: Samsung Electronics Co., Ltd., Yeongtong-gu Suwon-city, Gyeonggi-do 442-742 (KR)
(72) Inventor: Yang, Yong-Seok, Chungcheongnam-do (KR); Ha, Jin-Ho, Gyeonggi-do (KR); Kang, Jung-Tae, Gyeonggi-do (KR)
(74) Representative: Weitzel, Wolfgang

(57) **Abstract**

A backlight assembly and a method of assembling the backlight assembly that includes a plurality of lamps (210) having first (213) and second electrodes, a receiving container and a lamp ground member (300). The receiving container has a bottom plate over which the lamps are disposed, and a side wall extending from the bottom plate to form a receiving space. The lamp ground member includes a ground plate (310) grounded to the bottom plate, and a plurality of electrode ground portions (320) protruded from the ground plate and making contact with the first electrode thereby eliminating the need for a separate part for grounding the first electrode of the lamp and permitting easier assembly of the backlight assembly.

## Description

### BACKGROUND OF THE INVENTION

### Field of the Invention

The present invention relates to a backlight assembly for liquid crystal displays (LCD) and, more particularly, to a backlight assembly that permits improved manufacturing using automatic assembly procedures..

### Description of the Related Art

Generally, backlight assemblies used for liquid crystal displays are classified as a direct or edge-illumination. A direct-illumination backlight assembly includes a light source located under the liquid crystal panel while an edge-illumination backlight assembly includes a light source that is disposed at one or both sides of a light guide plate located under the liquid crystal panel. The direct-illumination backlight assembly has poorer light uniformity and durability than the edge-illumination type. The direct-illumination backlight assembly has a plurality of parallel lamps that improve light efficiency, and is thus used for large-sized LCD apparatus.

When the lamps are driven from one end, a lamp driving voltage is applied to the hot electrode of the lamp and the cold electrode of the lamp is grounded. The hot electrode is electrically connected to an inverter through a lamp holder or a lamp socket. When the lamp holder is used, the hot electrode is electrically connected to the inverter through the lamp holder, a wire soldered to the hot electrode inserted into the lamp holder, and a connector formed at an end portion of the wire.

The cold electrode may be grounded to a bottom chassis by using the lamp holder or the lamp socket. When the lamp holder is used, the cold electrode is inserted into the lamp holder and the cold electrode is connected to the bottom chassis by a wire so that the cold electrode is grounded to the bottom chassis.

When the lamp socket is used, a plurality of lamp sockets is combined with a socket alignment plate combined with the bottom chassis so that the terminal of the lamp socket makes direct contact with the cold electrode and the socket alignment plate, thereby grounding the cold electrode to the bottom chassis.

When the cold electrode is grounded as mentioned above, many parts such as the lamp holder, the wire, the screw, the lamp socket, the socket alignment plate and so on, are used in the backlight assembly. In addition, a lamp assembly process, a soldering process, a final assembly process, and so on, are necessary, making automatic assembly difficult.

### SUMMARY OF THE INVENTION

The present invention provides a backlight assembly that may be automatically assembled by decreasing the number of parts for grounding a plurality of lamps.

The present invention also provides a method for automatically assembling the backlight assembly.

In an exemplary backlight assembly according to the present invention, the backlight assembly includes a plurality of lamps, a receiving container, and a lamp ground member. Each of the lamps includes a lamp body and first and second electrodes respectively formed at end portions of the lamp body. The receiving container includes a bottom plate over which the lamps are disposed and a side wall extending from the bottom plate to form a receiving space. The lamp ground member includes a ground plate grounded to the bottom plate, and a plurality of electrode ground portions protruded from the ground plate and making contact with the first electrode.

The electrode ground portions may include a first fixing portion and a second fixing portion. The first fixing portion may extend from the ground plate and make contact with a first side of the first electrode. The second fixing portion may extend from the ground plate and make contact with a second side of the first electrode. The second side may be opposite to the first side. The first fixing portion may be spaced apart from the second fixing portion along longitudinal and width directions of the ground plate. The first fixing portion may become more spaced apart from the second fixing portion accordingly as the first electrode becomes closer to the ground plate.

The ground plate may include an upper portion and a side portion. The upper portion may face the bottom plate and may have the electrode ground portions formed on the upper portion. The side portion may extend from an edge of the upper portion and make contact with the bottom plate.

The lamp ground member may further include an opening control portion. The opening control portion may extend from the ground plate to outside of the first and second fixing portions to prevent an excessive gap being opened between the first and second fixing. The opening control portion may include a first opening control portion and a second opening control portion. The first opening control portion may extend from the ground plate, and may be disposed outside of the first fixing portion. The second opening control portion may extend from the ground plate, and face the first opening control portion. The first and second fixing portions may be disposed between the first and second opening control portions.

The lamp ground member may further include an electrode guide portion protruded from the ground plate to guide the first electrode to a gap between the first and second fixing portions.

Alternatively, the electrode ground portion may be formed via incising a portion of the ground plate and curving the portion of the ground plate to an upper direction, and a supporting groove in which the first electrode is disposed may be formed at an upper edge of the electrode ground portion.

The backlight assembly may include a side cover covering the lamp ground member and having protrusions that are respectively combined with the supporting grooves and constrain the first electrode. The side cover may include a guide plate and an upper plate. The guide plate may have interference prevention grooves to prevent interference with the lamps. The upper plate may extend from the guide plate to face the bottom plate. The protrusions may be formed beneath the upper plate.

The backlight assembly may include a power applying substrate and a lamp holder. The power supplying substrate may supply lamp driving power to the second electrode. The lamp holder may be combined with the second electrode and may electrically connect the second electrode with the power supplying substrate.

In a method for assembling the backlight assembly according to the present invention, the method includes grounding a lamp ground member at a first side of a bottom plate of a bottom chassis. The lamp ground member has a ground plate, electrode ground portions protruded from the ground plate and opening control portions preventing the electrode ground portions from being excessively opened. Lamp holders are disposed at a second side of the bottom plate corresponding to the first side of the bottom plate. First and second electrodes that are respectively formed at opposite ends of lamp bodies, are respectively disposed on the electrode ground portions and the lamp holders. The first and second electrodes are electrically connected and fixed to the electrode ground portions and the lamp holders respectively, via pressurizing the first and second electrodes by using a pressurizing device.

The first and second electrodes may be electrically connected and fixed to the electrode ground portions and the lamp holders respectively, via pressurizing the first and second electrodes at the same time.

Alternatively, the first and second electrodes may be electrically connected and fixed to the electrode ground portions and the lamp holders respectively, via pressurizing the first and second electrodes at different times.

Accordingly, a first electrode of a lamp having less number of parts is grounded to a receiving container via an automatic assembly process, so that the number of parts of a backlight assembly may be decreased and the backlight assembly may be more easily assembled.

### BRIEF DESCRIPTION OF THE DRAWINGS

The above and other features and advantages of the present invention will become more apparent by describing in detailed example embodiments thereof with reference to the accompanying drawings, in which:

FIG. 1 is an exploded perspective view illustrating a backlight assembly according to an example embodiment of the present invention;

FIG. 2 is a perspective view illustrating a lamp ground member in FIG. 1;

FIG. 3 is a plan view illustrating the backlight assembly in FIG. 1;

FIG. 4 is a cross-sectional view taken along a line I-I' in FIG. 1;

FIG. 5 is a cross-sectional view taken along a line II-II' in FIG. 1;

FIG. 6 is an exploded perspective view illustrating a backlight assembly according to another example embodiment of the present invention;

FIG. 7 is a perspective view illustrating a lamp ground member in FIG. 6;

FIG. 8 is an enlarged perspective view illustrating a portion of the lamp ground member in FIG. 7;

FIG. 9 is an enlarged perspective view illustrating the portion of the lamp ground member in FIG. 7 that is viewed at an angle different from FIG. 8;

FIG. 10 is a side view illustrating the lamp ground member in FIG. 7;

FIG. 11 is a perspective view partially illustrating a lamp ground member according to an example embodiment of the backlight assembly;

FIG. 12 is a plan view illustrating the lamp ground member in FIG. 11;

FIG. 13 is a perspective view partially illustrating the lamp ground member according to another example embodiment of the backlight assembly;

FIG. 14 is an exploded perspective view illustrating a backlight assembly according to still another example embodiment of the present invention;

FIG. 15 is a perspective view illustrating a lamp ground member in FIG. 14;

FIG. 16 is a perspective view illustrating a rear surface of a side cover in FIG. 14;

FIG. 17 is a cross-sectional view illustrating a line III-III' in FIG. 14;

FIG. 18 is a cross-sectional view illustrating a line IV-IV' in FIG. 14;

FIG. 19 is a side view illustrating a method for assembling a backlight assembly according to an example embodiment of the present invention;

FIG. 20 is a side view illustrating a combination of lamp electrodes with a lamp ground member; and

FIGS. 21 and 22 are side views illustrating a method for assembling a backlight assembly according to another example embodiment of the present invention.

### DESCRIPTION OF THE EMBODIMENTS

The invention is described more fully hereinafter with reference to the accompanying drawings, in which embodiments of the invention are shown. In the drawings, the size and relative sizes of layers and regions may be exaggerated for clarity. It will be understood that when an element or layer is referred to as being "on," "connected to" or "coupled to" another element or layer, it can be directly on, connected or coupled to the other element or layer or intervening elements or layers may be present. In contrast, when an element is referred to as being "directly on," "directly connected to" or "directly coupled to" another element or layer, there are no intervening elements or layers present.

### Backlight Assembly

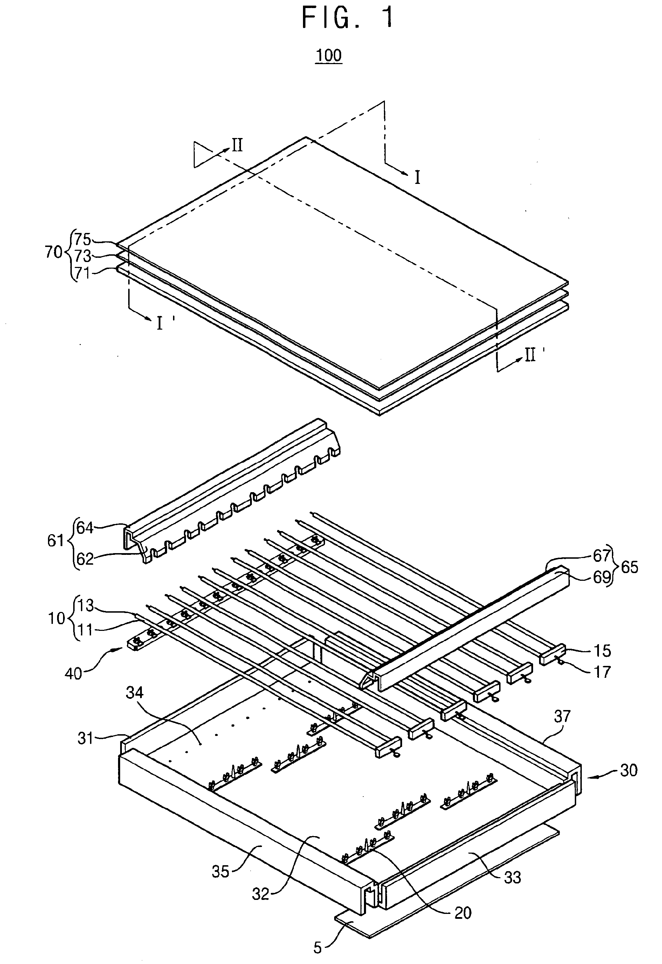

FIG. 1 is an exploded perspective view illustrating a backlight assembly 100 according to an exemplary embodiment of the present invention.

Referring to FIG. 1, a backlight assembly 100 according to the present example embodiment of the present invention includes a plurality of lamps 10, a receiving container 30 and a lamp ground member 40.

Each of the lamps 10 is a cold cathode fluorescent lamp (CCFL). Alternatively, each of the lamps 10 may be an external electrode fluorescent lamp (EEFL).

Each of the lamps 10 includes a lamp body 11, a first electrode 13 and a second electrode.

The lamp body 11 is a tube into which a discharge gas such as argon (Ar) and mercury (Hg) is injected and which has a straight line shape. A fluorescent material is coated on an inner surface of the lamp body 11. The first and second electrodes are respectively disposed at opposite ends of the lamp body 11, to face each other. The first and second electrodes include a discharge electrode and a lead line. The discharge electrode is disposed inside of the lamp body 11, and the lead line extends from the discharge electrode to outside of the lamp body 11. Hereinafter, the first and second electrodes are used to designate the lead line.

The receiving container 30 receives a plurality of lamps 10. The receiving container 30 includes a bottom plate 32, a first side wall 31, a second side wall 33, a third side wall 35 and a fourth side wall 37.

The bottom plate 32 has a substantially rectangular shape. The first, second, third and fourth side walls 31, 33, 35 and 37 respectively extend from four sides of the bottom plate 34, to form a receiving space.

The first and second side walls 31 and 33 face each other. The third and fourth side walls 35 and 37 face each other, and respectively connect the first side wall 31 with the second side wall 33.

A stepped portion is formed at upper portions of the third and fourth side walls 35 and 37. A plurality of first combining holes 34 is formed through the bottom plate 32 adjacent to the first side wall 31, so that the first combining holes 34 and the bottom plate 32 is combined with a screw. A plurality of wire holes is formed through the bottom plate 32 adjacent to the second side wall 33, so that a wire may be drawn out along the second side wall 33.

The backlight assembly 100 may further include a lamp holder 15 and a connector 17. The lamp holder 15 receives an end portion of the lamp at which the second electrode is formed. Two lamps 10 are combined with one lamp holder 15. The lamp holder 15 is fixed to the bottom plate 32 adjacent to the second side wall 33. A connector 17 connected to the lamp holder 15 is drawn out to a rear surface of the bottom plate 32 through the wire holes.

The backlight assembly 100 may further include a plurality of lamp supporters 20. The lamp supporters 20 are fixed to the bottom plate 32. The lamp supporter 20 aligns the lamps 10, and prevents the lamps 10 from sagging.

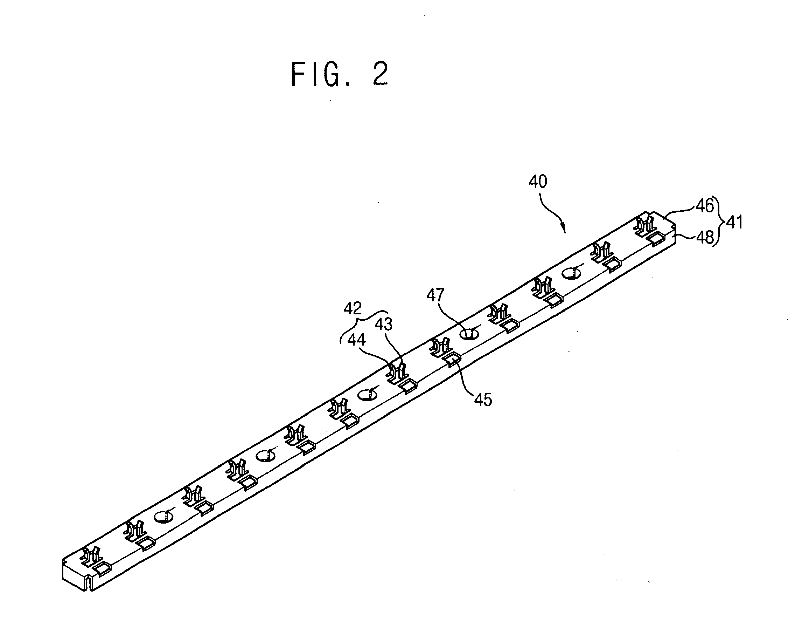

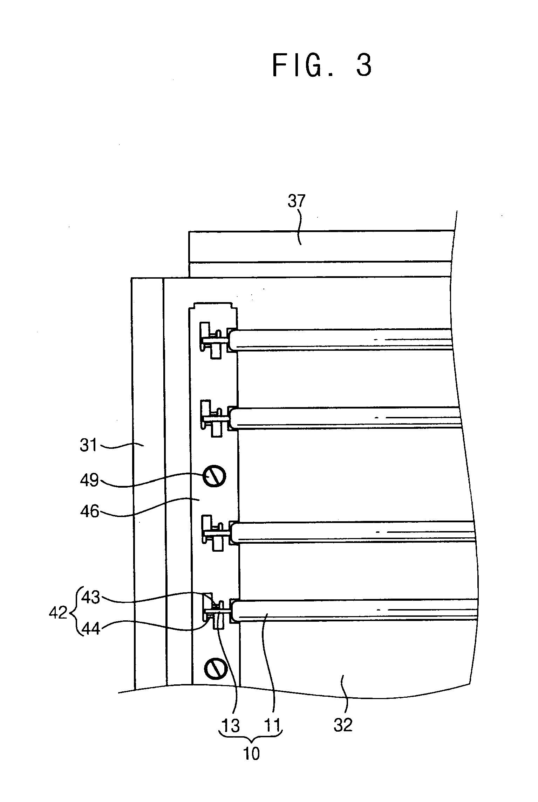

FIG. 2 is a perspective view illustrating the lamp ground member in FIG. 1. FIG. 3 is a plan view illustrating the backlight assembly in FIG. 1.

Referring to FIGS. 2 and 3, the lamp ground member 40 supports the end portion of each of the lamps 10 at which the first electrode 13 is formed. The lamp ground member 40 may include a conductive metallic material. The lamp ground member 40 is fixed to the bottom plate 32, to cover the first combining holes 34 formed adjacent to the first side wall 31. The lamp ground member 40 includes a ground plate 41 and a plurality of electrode ground portions 42.

The ground plate 41 may include an upper portion 46 and a side portion 48.

The upper portion 46 has a substantially four-edge plate shape extending substantially perpendicular to a longitudinal direction of each of the lamps 10. The side portion 48 extends from four edges of the upper portion 46 and makes contact with the bottom plate 32 of the receiving container 30 to be grounded.

A plurality of electrode ground portions 42 is formed on the upper portion 46. Each of the electrode ground portions 42 holds the first electrode 13 of each of the lamps 10, and grounds the first electrode 13 to the bottom plate 32.

Each of the electrode ground portions 42 may include a first fixing portion 43 and a second fixing portion 44. The first electrode 13 is inserted into a gap between the first and second fixing portions 43 and 44. Thus, the first fixing portion 43 makes contact with a first side of the first electrode 13 having a bar shape, and the second fixing portion 44 makes contact with a second side of the first electrode 13 facing the first side of the first electrode 13.

The first and second fixing portions 43 and 44 are formed via incising a portion of the upper portion 46 of the ground plate 41. For example, the portion of the upper portion 46 is incised to have a predetermined width along a longitudinal direction of the upper portion 46, and then the portion of the upper portion 46 is curved to an upper direction to form the first fixing portion 43. The first fixing portion 43 extends substantially perpendicular to the upper portion 46. An upper end of the fixing portion 43 is curved again along the curved direction of the first fixing portion 43.

The second fixing portion 44 is spaced apart from the first fixing portion 43, along the width direction of the upper portion 46 (a longitudinal direction of each of the lamps 10) and the longitudinal direction of the upper portion 46. The portion of the upper portion 46 is partially incised, and then the portion is curved opposite to the curved direction of the first fixing portion 43 to form the second fixing portion 44. The upper end of the second fixing portion 44 is curved again along the curved direction of the second fixing portion 44.

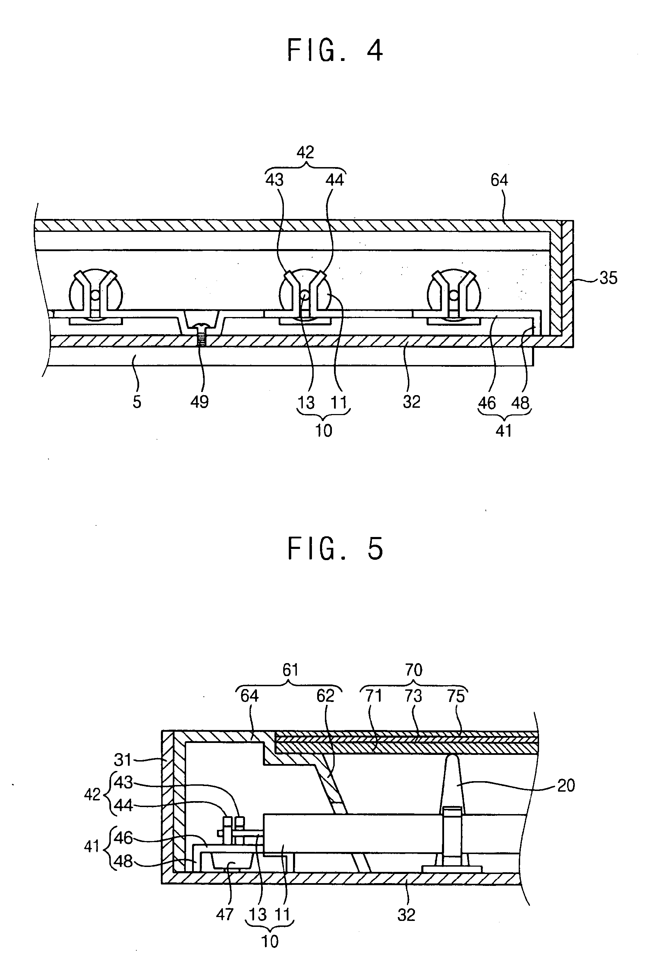

FIG. 4 is a cross-sectional view taken along a line I-I' in FIG. 1. FIG. 5 is a cross-sectional view taken along a line II-II' in FIG. 1.

Referring to FIGS. 4 and 5, when viewed from the width direction of the upper portion 46, for example the longitudinal direction of the lamp 10, the first and second fixing portions 43 and 44 is disposed to be a Y-shape. When viewed from the longitudinal direction of the upper portion 46, the first and second fixing portions 43 and 44 are disposed to be an '11' shape.

A plurality of guide openings 45 is formed through an edge at which the upper portion 46 and the side portion 48 intersect with each other. The guide openings 45 are formed to have a predetermined depth along the width direction of the upper portion 46 and the longitudinal direction of the side portion 48. When each of the lamps 10 is combined with the electrode ground portion 42, the guide opening 45 prevents interference between the end of each of the lamps 10 and the ground plate 41. Alternatively, when the heights of the first and second fixing portions 43 and 44 are sufficiently large, the guide openings 45 may be omitted.

Second combining holes 47 are formed through the upper portion 46 between the electrode ground portions 42. The second combining holes 47 are aligned respectively corresponding to the first combining holes 34 formed through the bottom plate 32.

A screw 49 is combined with the first and second combining holes 34 and 47 to fix the lamp ground member 40 to the bottom plate 32. Alternatively, a combining hole may be formed through the upper portion 46, and a combining protrusion may be formed on the bottom plate 32 to be inserted into the combining hole 46. In addition, the combining hole may be formed through the bottom plate 32, and the combing protrusion may be formed on the upper portion 46.

The backlight assembly 100 may further include a power supplying substrate 5. The power supplying substrate 5 is disposed beneath the bottom plate 32 to output a lamp driving voltage. A connector 17 is electrically connected to the second electrode through the wire. The connector 17 drawn out through the wire hole is electrically connected to a terminal formed at the power supplying substrate.

When the lamp driving voltage is applied, an electric field is generated between the first and second electrodes and an arc discharge is generated from the second electrode. The discharge gas generates ultraviolet rays due to the arc discharge. The ultraviolet rays pass through the fluorescent material to be converted into visible rays.

The backlight assembly 100 may further include a first side cover 61, a second side covers 65, and an optical sheet 70.

The first side cover 61 is disposed along the first side wall 31 to cover the first electrode 13 of the lamps 10. The first side cover 61 may include a first guide plate 62 and a first upper plate 64.

The first guide plate 62 faces the first side wall 31, and makes contact with the bottom plate 32. Interference prevention grooves are formed on the first guide plate 62 to prevent from interfering with the lamps 10. The first upper plate 64 extends from the first guide plate 62 to face the bottom plate 32. A stepped portion is formed at the first upper plate 64, and the optical sheet 70 is disposed on the stepped portion.

The second side cover 65 is disposed along the second side wall 33 to cover the second electrode of the lamps 10. The second side cover 65 may include a second guide plate 67 and a second upper plate 69.

The optical sheet 70 enhances optical characteristics such as brightness uniformity and the front brightness of light emitted from the lamps 10. The optical sheet 70 may include a diffusion plate 71 and condensing sheets 73 and 75 that are integrated on the stepped portion of the first and second side covers 61 and 65. The diffusion plate 71 enhances the brightness uniformity of the light emitted from the lamps 10. The condensing sheets 73 and 75 enhance the front brightness of the light emitted from the diffusion plate 71. The optical sheet 70 may include a diffusion sheet disposed between the diffusion plate 71 and the condensing sheets 73 and 75, and a reflective sheet disposed above the bottom plate 32.

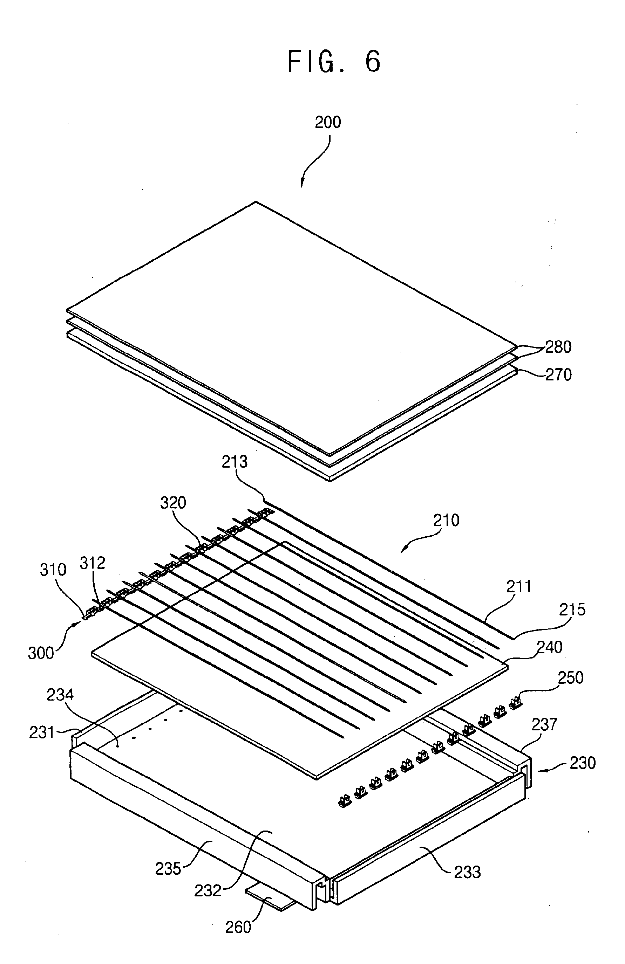

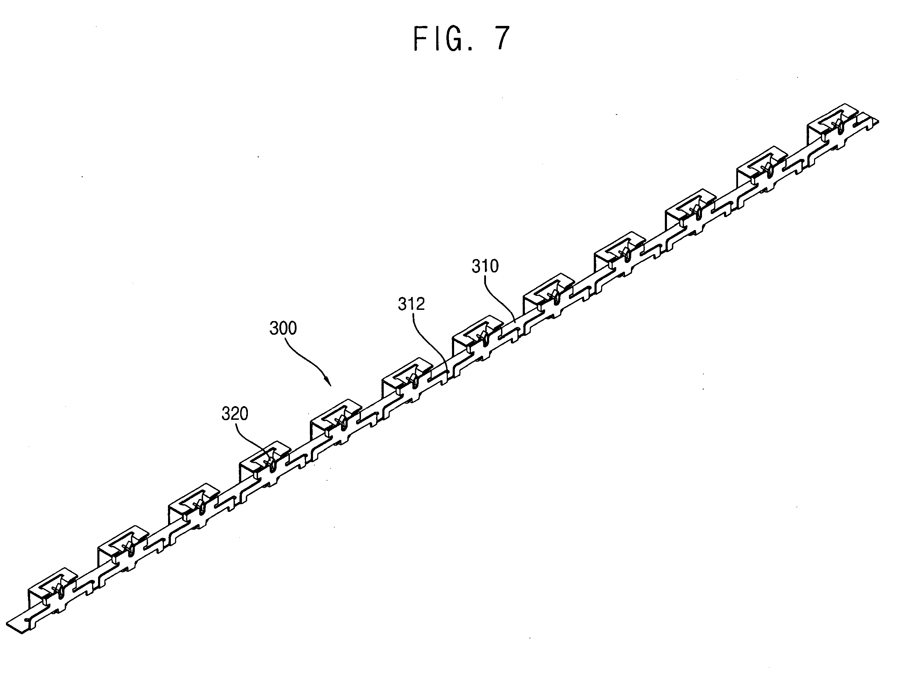

FIG. 6 is an exploded perspective view illustrating a backlight assembly according to another example embodiment of the present invention. FIG. 7 is a perspective view illustrating the lamp ground member in FIG. 6.

Referring to FIGS. 6 and 7, a backlight assembly 200 according to the present example embodiment of the present invention includes a plurality of lamps 210, a receiving container 230 and a lamp ground member 300.

Each of the lamps 210 is substantially the same as each of the lamps 10 explained in the previous example embodiment. Each of the lamps 210 includes a lamp body 211, a first electrode 213 and a second electrode 215.

The receiving container 230 is substantially the same as the receiving container 30 explained in the previous example embodiment. The receiving container 230 may include a metallic material having good conductivity and strength.

A plurality of lamps 210 is disposed substantially parallel with each other over the bottom plate.

The lamp ground member 300 is grounded to the bottom plate 232. The lamp ground member 300 is electrically connected to the first electrode 213 of each of the lamps 210. Thus, the lamp ground member 300 grounds the first electrode 213 of the lamps 210 to the bottom plate 232 of the receiving container 230.

The lamp ground member 300 may include the metallic material having good conductivity. For example, the lamp ground member 300 may include a copper (Cu) alloy material having good machineability and good conductivity.

The lamp ground member 300 includes a ground plate 310 and electrode ground portions 320. The ground plate 310 is longitudinally disposed along the first side wall 231. The electrode ground portions 320 protrude from the ground plate 310 to respectively correspond to the first electrode portions 213. The electrode ground member 320 makes contact with the first electrode 213. The electrode ground member 320 fixes and electrically connects the first electrode 213 to the receiving container 230.

The ground plate 310 may include first combining holes 312 formed through the ground plate 310 between the electrode ground members 320, so that the ground plate 310 is combined with the bottom plate 232 by the screw. Second combining holes 234 respectively corresponding to the first combining holes 312 are formed through the bottom plate 232. The first and second combining holes 312 and 234 are formed between the electrode ground members 320 adjacent to each other. Alternatively, the first and second combining holes 312 and 234 may be formed between predetermined ones of electrode ground members 320.

A concavo-convex portion is formed on at least one inner surface of the first and second combining holes 312 and 234 to be combined by the screw, via tapping the inner surface of the first and second combining holes 312 and 234. Alternatively, the ground plate 310 and the receiving container 230 may be riveted by using the first and second combining holes 312 and 234.

Accordingly, the first electrodes 213 are electrically connected and fixed by the lamp ground member 300, so that the lamps 210 are grounded to the receiving container 230. Thus, manufacturing costs may be decreased.

The backlight assembly 200 may further include a power supplying substrate 260 and lamp sockets 250.

The power supplying substrate 260 is disposed beneath the bottom plate 232, to supply the lamp driving power to the second electrodes 21 5 of the lamps 210: The lamp socket 250 is disposed through the combining holes formed through the power supplying substrate 260 and the bottom plate 232. The second electrodes 215 are electrically connected and fixed to the lamp sockets 250 by using an additional pressurizing device. The lamp socket 250 electrically connects the second electrodes 215 with the power supplying substrate 260.

The backlight assembly 200 may further include a diffusion plate 270, condensing sheets 280 and a reflective plate 240.

The diffusion plate 270 and the condensing sheets 280 are sequentially integrated over the lamps 210. The diffusion plate 270 enhances the brightness uniformity of the light emitted from the lamps 210. The condensing sheets 280 enhance the front brightness of the light emitted from the diffusion plate 270. The reflective plate 240 is disposed between the lamps 210 and the bottom plate 232 of the receiving container 230, to reflect the light emitted from the lamps 210 to an upper direction. Alternatively, an edge of the reflective plate 240 corresponding to the first combining holes 312 may be removed to form a concavo-convex pattern, so that the lamp ground member 300 is combined by the screw.

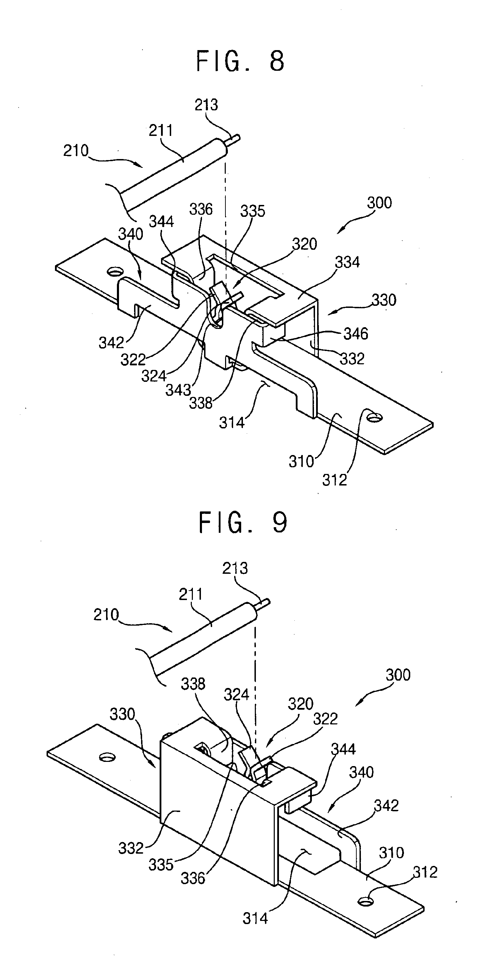

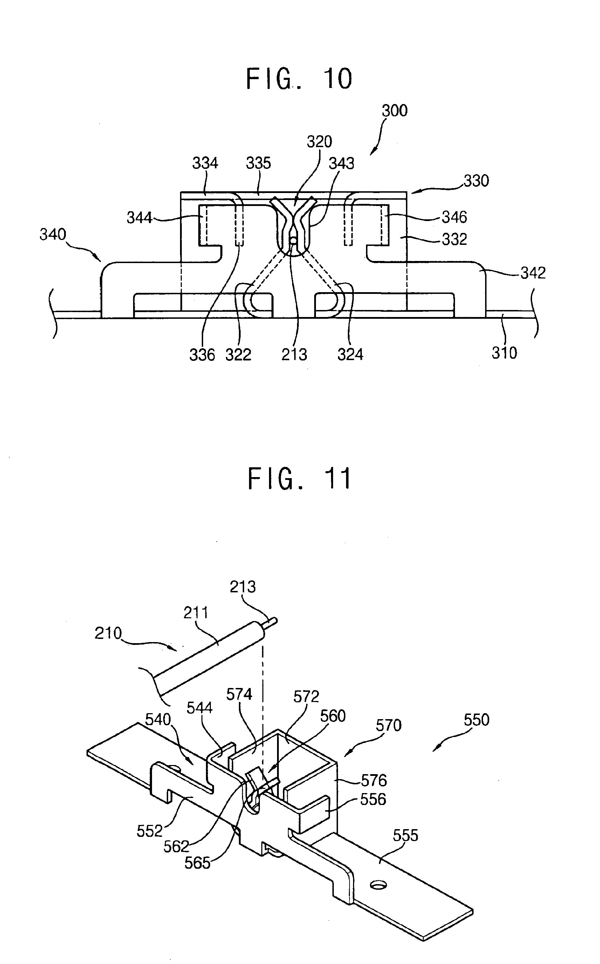

FIG. 8 is an enlarged perspective view illustrating a portion of the lamp ground member in FIG. 7. FIG. 9 is an enlarged perspective view illustrating the portion of the lamp ground member in FIG. 7 that is viewed from an angle different from FIG. 8. FIG. 10 is a side view illustrating the lamp ground member in FIG. 7.

Referring to FIGS. 8, 9 and 10, the electrode ground portion 320 may include a first fixing portion 322 and a second fixing portion 324.

The first and second fixing portions 322 and 324 extend from the ground plate 310, and the first and second fixing portions 322 face each other along the longitudinal direction of the ground plate 310. The first and second fixing portions 322 and 324 have a clamp shape.

The first fixing portion 322 encloses a first side of the first electrode 213 along the longitudinal direction of the ground plate 310, and makes contact with the first side of the first electrode 213. The second fixing portion 324 encloses a second side of the first electrode 213 facing the first side of the first electrode 213, and makes contact with the second side of the first electrode 213. Thus, the first and second fixing portions 322 and 324 fix and electrically ground the first electrode 213 to the bottom plate 232.

The distance between the first and second fixing portions 322 and 324 increases as the fixing position of the first electrode 213 from the ground plate 310 increases. For example, the first and second fixing portions 322 and 324 are curved to have a predetermined angle at an upper portion of the first electrode 213. The first and second fixing portions 322 and 324 have an insertion area, through which the first electrode 213 is inserted, the insertion area being larger than a fixing area, in which the first electrode 213 is fixed.

The first electrode 213 passes through the insertion area of the first and second fixing portions 322 and 324, to be fixed to the fixing area of the first and second fixing portions 322 and 324. The portion over the first electrode 213 of the first and second fixing portions 322 and 324 is tightly constrained so that the first electrode 213 is prevented from being spaced apart from the fixing area.

The first electrode 213 is fixed to the first and second fixing portions 322 and 324 via automatically spacing the distance between the first and second fixing portions 322 and 324 by using the pressurizing device. Alternatively, the first electrode 213 may be manually fixed to the first and second fixing portions 322 and 324.

The distance between the first and second fixing portions 322 and 324 increases as the first electrode 213 becomes closer to the ground plate 310. For example, the first and second fixing portions 322 and 324 have a curved shape to form a predetermined angle under the first electrode 213:

Thus, the first and second fixing portions 322 and 324 have strong elasticity. Thus, the first electrode 213 inserted into a gap between the first and second fixing portions 322 and 324 is tightly fixed to the gap between the first and second fixing portions 322 and 324.

A portion of the ground plate 310 is incised and curved to the upper direction, to form the first and second fixing portions 322 and 324. Thus, an opening portion 314 is formed through the ground plate 310, corresponding to the electrode ground portion 320. The opening portion 314 dissipates the heat generated from the first electrode 213.

The lamp ground member 300 may further include an opening control portion 330.

The opening control portion 330 extends from the ground plate 310 to be disposed outside of the electrode ground portion 320. The opening control portion 330 prevents the first and second fixing portions 322 and 324 from being excessively spaced apart from each other in a combining process of the first and second fixing portions 322 and 324, so that the first and second fixing portions 322 and 324 are prevented from being deformed.

The opening control portion 330 may include a first opening control portion 336 and a second opening control portion 338. The first opening control portion 336 extends from the ground plate 310, and is disposed outside of the first fixing portion 322 along the longitudinal direction of the ground plate 310. The second opening control portion 338 extends from the ground plate 310, so that the second opening control portion 338 is disposed to face the first opening control portion 336, and the first and second fixing portions 322 and 324 are disposed between the first and second opening control portions 336 and 338.

When the first and second fixing portions 322 and 324 are spaced apart from each other, the first fixing portion 322 makes contact with the first opening control portion 336 and the second fixing portion 324 makes contact with the second opening control portion 338. The first and second opening control portions 336 and 338 have sufficient hardness to prevent the first and second fixing portions 322 and 324 from being excessively spaced apart from each other.

The opening control portion 330 may be variously modified, so that the first and second opening control portions 336 and 338 may be disposed outside of the first and second fixing portions 322 and 324.

For example, the opening control portion 330 may further include a supporting portion 332 and an upper plate 334.

The supporting portion 332 extends from an edge area along the width direction of the ground plate 310, to face the first electrode 213. The supporting portion 332 has an opening portion formed through a central portion of the supporting portion 332, so that the heat generated from the first electrode 213 is more efficiently dissipated.

The upper plate 334 extends parallel with the ground plate 310 from an upper edge of the supporting portion. An exposing groove 335 exposing the first and second fixing portions 322 and 324 is formed on the upper plate 334. The first and second opening control portions 336 and 338 extend from the exposing groove 335, so that the first and second opening control portions 336 and 338 are disposed outside of the first and second fixing portions 322 and 324.

The first opening control portion 336 extends substantially perpendicular to the ground plate 310 from a first edge of the exposing groove 335, to be disposed outside of the first fixing portion 322. The second opening control portion 338 extends substantially perpendicular to the ground plate 310 from a second edge of the exposing groove 335, to be disposed outside of the second fixing portion 324. The second opening control portion 338 is opposite to the first opening control portion 336 with respect to the electrode ground portion 320.

The first and second opening control portions 336 and 338 are spaced apart from the first and second fixing portions 322 and 324, so that the first and second fixing portions 322 and 324 are sufficiently opened to fix the first electrode 213. In addition, the distance between the first and second opening control portions 336 and 338 is larger or substantially the same as the distance between the first and second fixing portions 322 and 324. Thus, the first and second opening control portions 336 and 338 prevent a gap between the first and second fixing portions 322 and 324 from being excessively opened and the first and second fixing portions 322 and 324 from being damaged by the pressurizing device.

For example, the first and second opening control portions 336 and 338 prevent the gap between the first and second fixing portions 322 and 324 from being excessively opened and not being restored by stress, so that the first electrode 213 is completely fixed to the first and second fixing portions 322 and 324. When the first electrode 213 is fixed to the first and second fixing portions 322 and 324 by an automatic process, such damage may cause critical bad results. For example, after the automatic process, an additional inspection process may be necessary, so that manufacturing time may be increased.

The opening control portion 330 is formed via extending the supporting portion 332, the upper plate 334, the first control portion 336 and the second control portion 338 opposite to each of the lamps 210 and sequentially curving the supporting portion 332, the upper plate 334, the first control portion 336 and the second control portion 338, when the ground plate 310 is formed. Alternatively, the opening control portion 330 may be manufactured, and then may be combined with the ground plate 310 via a combining process such as a welding.

The lamp ground member 300 may further include an electrode guide portion 340.

The electrode guide portion 340 protrudes from the ground plate 310, to guide the first electrode 213 to the gap between the first and second fixing portions 322 and 324. The electrode guide portion 340 may include a supporting plate 342, a first protrusion 344 and a second protrusion 346.

The supporting plate 342 is protruded from the edge area along the width direction of the ground plate 310, to face the supporting portion 332. The supporting plate 342 is formed via extending a portion of the ground plate 310 along the width direction corresponding to each of the lamps 210 and curving the portion. A guide groove 343 is formed on the supporting plate 342 corresponding to the first electrode 213, to support the first electrode 213.

The supporting plate 342 is partially connected to the ground plate, due to the opening portion 314 formed through the ground plate 310.

The first and second protrusions 344 and 346 respectively extend from opposite ends of the supporting plate 342 along the longitudinal direction, to enhance the machineability and prevent deformation due to an external force. The first and second protrusions 344 and 346 are connected to the ground plate 310.

The first protrusion 344 extends from a first end of the supporting plate 342, to be disposed outside of the first opening control portion 336 along the longitudinal direction of the ground plate 310. The second protrusion 346 extends from a second end of the supporting plate 342, to be disposed outside of the second opening control portion 338 along the longitudinal direction of the ground plate 310.

When the pressurizing device automatically combines the first electrode 213 with the first and second fixing portions 322 and 324, the first and second protrusions 344 and 346 prevent the first and second fixing portions 322 and 324 from being excessively spaced apart from each other in addition to the first and second opening control portions 336 and 338.

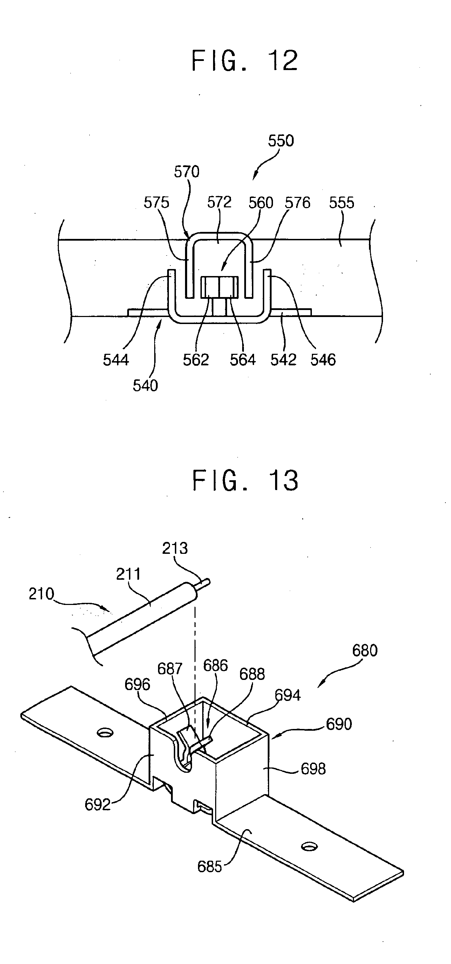

FIG. 11 is a perspective view partially illustrating a lamp ground member according to an example embodiment of the backlight assembly. FIG. 12 is a plan view illustrating the lamp ground member in FIG. 11.

Referring to FIGS. 11 and 12, the backlight assembly according to the present example embodiment is substantially the same as the backlight assembly according to the previous example embodiment in FIGS. 6, 7, 8, 9 and 10, except for a lamp ground member 550.

The lamp ground member 550 according to the present example embodiment is substantially the same as the lamp ground member 300 according to the previous example embodiment in FIGS. 6, 7, 8, 9 and 10, except for the opening control portion 570.

The opening control portion 570 may further include a supporting portion 572, a first opening control portion 574 and a second opening control portion 576.

The supporting portion 572 extends from an edge area along the width direction of the ground plate 555, to face the first electrode 213.

The first opening control portion 574 extends from a first side of the supporting portion 572 along the longitudinal direction of the ground plate 555, to be disposed outside of the first fixing portion 562 of the electrode ground portion 560. The second opening control portion 576 extends from a second side of the supporting portion 572 along the longitudinal direction of the ground plate 555, to be disposed outside of the second fixing portion 564 of the electrode ground portion 560.

For example, a portion of the ground plate 555 substantially parallel with the ground plate 555 is curved, so that the supporting portion 572 is formed substantially perpendicular to ground plate 555. A portion of the supporting portion 572 is secondly curved to form the first and second opening control portions 574 and 576.

The first and second opening control portions 574 and 576 may be combined with the ground plate 555 by the welding, so that the first and second fixing portions 562 and 564 may be prevented from being deformed. The first and second opening control portions 574 and 576 extend to have a predetermined width along the width direction to include the first and second fixing portions 562 and 564.

The first and second opening control portions 574 and 576 directly extend from the supporting portion 572, so that the process to form the opening control portion 570 may be simplified.

The supporting portion 572 may include an opening portion formed through a central portion of the supporting portion 572, to dissipate the heat generated from the first electrode 213. In addition, the first and second opening control portions 574 and 576 may respectively include opening portions formed through central portions of the first and second opening control portions 574 and 576, to dissipate the heat generated from the first electrode 213.

First and second protrusions 544 and 546 that extend from the electrode guide portion 540 are disposed outside of the first and second opening control portions 574 and 576 along the longitudinal direction of the ground plate 555.

FIG. 13 is a perspective view partially illustrating the lamp ground member according to another example embodiment of the backlight assembly.

Referring to FIG. 13, an opening control portion 690 according to the present example embodiment is substantially the same as the opening control portion according to the previous example embodiment in FIGS. 8, 9 and 10, except that the opening control portion 690 has substantially the same function as the electrode guide portion.

A lamp ground member 680 includes the opening control portion 690 protruded from a ground plate 685, to enclose an electrode ground portion 686,

The opening control portion 690 includes a first prevention surface 692 formed adjacent to each of the lamps 210, a second prevention surface 694 facing the first prevention surface 692 and opposite to each of the lamps 210, and third and fourth prevention surfaces 696 and 698 guiding an outline of the first and second fixing portions 687 and 688 of the electrode ground portion 686 between the first and second prevention surfaces 692 and 694.

An electrode supporting groove 693 is formed on the first prevention surface 692, to support the first electrode 213 of each of the lamps 210. The third and fourth prevention surfaces 696 and 698 have a height larger or substantially the same as the height of the first and second fixing portions 687 and 688, to prevent the gap between the first and second fixing portions 687 and 688 from being excessively opened. The opening control portion 690 is manufactured, and then is combined with the ground plate 685 by the combining process such as the welding.

Accordingly, the third and fourth prevention surfaces 696 and 698 of the opening control portion 690 are supported by the first and second prevention surfaces 692 and 694, so that fixing force may be enhanced. Thus, the first and second fixing portions 687 and 688 may be more safely guided.

In this case, the third and fourth prevention surfaces 696 and 698 of the opening control portion 690 prevents the gap between the first and second fixing portions 687 and 688 from being excessively opened. Thus, the first and second prevention surfaces 692 and 694 may be useless.

The second prevention surface 694 includes an opening portion through the central portion of the second prevention surface 694, to dissipate the heat generated from the first electrode 213. In addition, the third and fourth prevention surfaces 696 and 698 may respectively include opening portions through the central portions of the third and fourth prevention surfaces 696 and 698, to dissipate the heat generated from the first electrode 213.

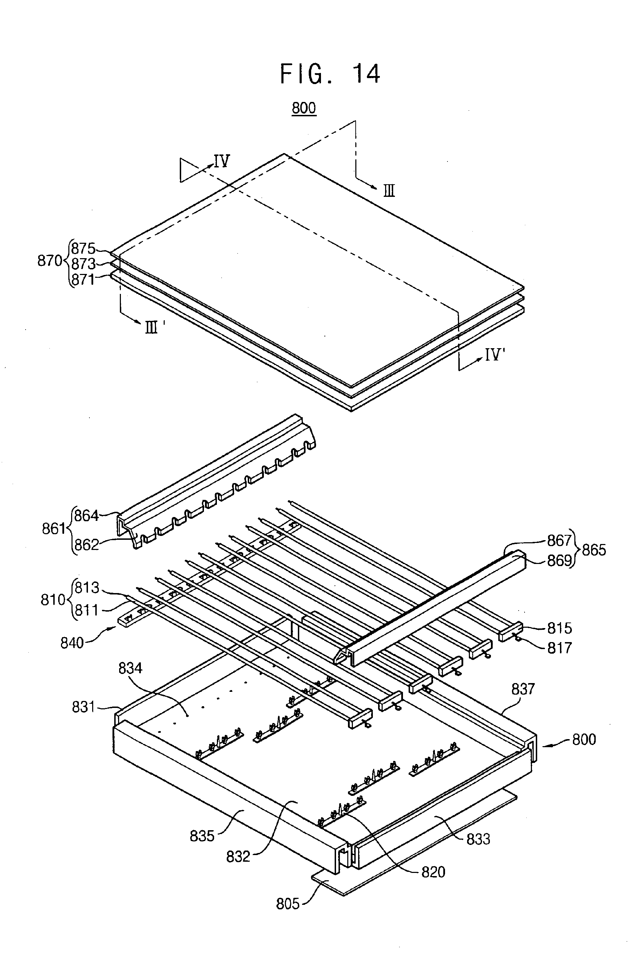

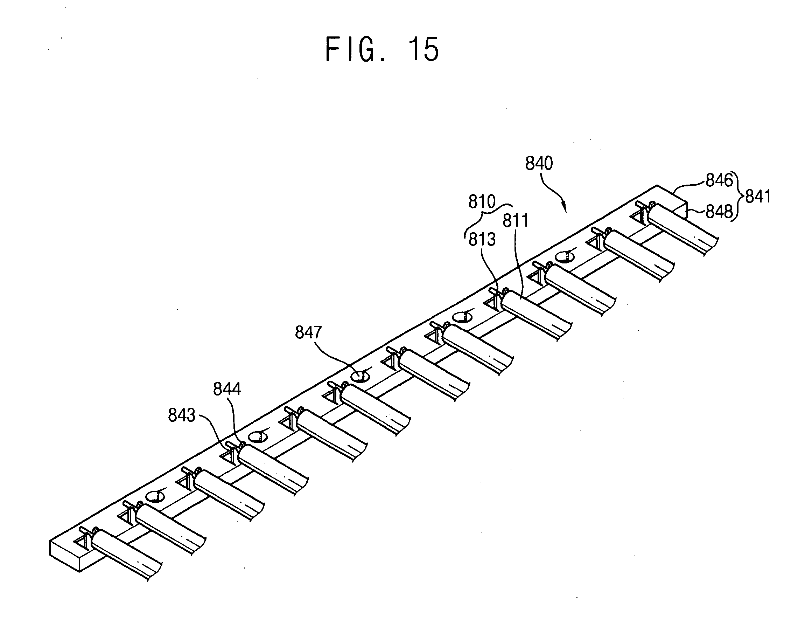

FIG. 14 is an exploded perspective view illustrating a backlight assembly according to still another example embodiment of the present invention. FIG. 15 is a perspective view illustrating the lamp ground member in FIG. 14.

Referring to FIG. 14, a backlight assembly 800 according to the present example embodiment includes a plurality of lamps 810, a receiving container 830, a lamp ground member 840, a lamp holder 815, a connector 817, a power supplying substrate 805, a first side cover 861, a second side cover 865, and an optical sheet 870. The backlight assembly 800 according to the present example embodiment is substantially the same as the backlight assembly 100 according to the previous example embodiment in FIGS. 1 to 5, except for the lamp ground member 840 and the first side cover 861.

Referring to FIG. 15, the lamp ground member 840 includes a ground plate 841 and a plurality of electrode ground portions 843. The ground plate 841 according to the present example embodiment is substantially the same as the ground plate 41 according to the previous example embodiment in FIG. 2, except for an omission of the guide opening preventing the interference with the lamps 810 and the shape of the electrode ground portion 843.

Thus, the ground plate 841 includes an upper portion 846 and a side portion 848. The electrode ground portions 843 are disposed parallel with each other on an upper portion 846. Second combining holes 847 are formed between the electrode ground portions 843.

A portion of the upper portion 846 is incised by a predetermined distance along the width direction of the upper portion 846 and is curved to an upper direction, to form the electrode ground portion 843. The electrode ground portion 843 is substantially perpendicular to the upper portion 846. The upper portion 846 has a substantially plate shape, and is disposed substantially parallel with the side portion 848 disposed along the width direction.

A supporting groove 844 having a rounded shape is formed on an upper edge of the electrode ground portion 843. A first electrode 813 of the lamp 810 is disposed in the supporting groove 844. For example, the first electrode 813 and the electrode ground portion 843 are combined with each other without insertion force, to prevent the lamp 810 and the first electrode 813 from being deformed. Thus, the supporting groove 844 has a width larger than a diameter or a thickness of the first electrode 813.

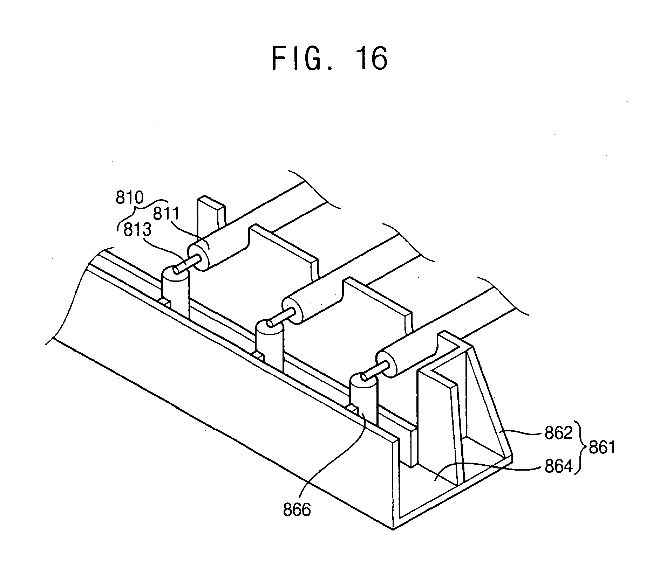

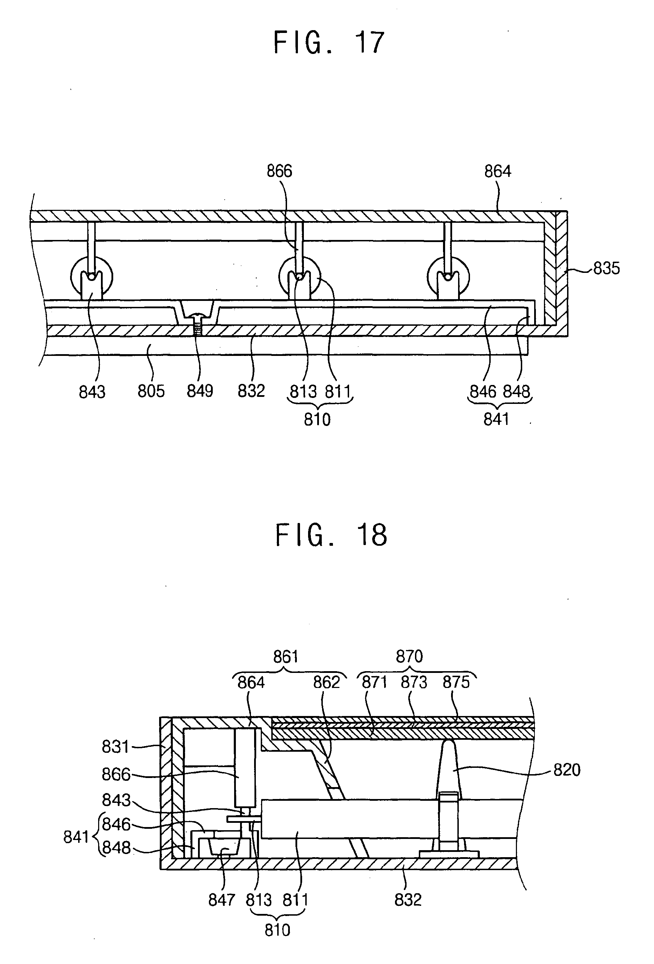

FIG. 16 is a perspective view illustrating a rear surface of a side cover in FIG. 14. FIG. 17 is a cross-sectional view illustrating a line III-III' in FIG. 14. FIG. 18 is a cross-sectional view illustrating a line IV-IV' in FIG. 14.

Referring to FIGS. 16, 17 and 18, the first side cover 861 includes a supporting plate 862 and an upper plate 864. The first side cover 861 according to the present example embodiment is substantially the same as the side cover 61 according to the previous example embodiment in FIGS. 1, 3, 4 and 5, except that the first side cover 861 includes protrusions 866 beneath the upper plate.

As explained in FIG. 8, a plurality of protrusions 866 is formed beneath the upper plate 864 corresponding to each of the first electrodes 813 of the lamps 810. As explained in FIGS. 17 and 18, each of the protrusions 866 is partially inserted into the supporting groove 844 of the electrode ground portion 843, to make contact with the first electrode 813. Thus, the first electrode 813 is constrained in upper and lower directions, so that the reliability of an electric connection between the first electrodes 813 and the lamp ground member 840 may be greatly enhanced.

The second side cover 865 is disposed along a second side wall 833 to cover the second electrode of the lamps 810. The second side cover 865 includes a supporting plate 867 and an upper plate 869.

In the present example embodiment, a first end of the lamp 810 having the first electrode 813 is not fixed by the lamp holder 815, different from a second end of the lamp 810 having the second electrode. The fixing force of the electrode ground portion 843 and the protrusion fixing the first electrode 813 may be less than the fixing force of the lamp holder 815. Thus, a lamp supporter 820 is close to the first electrode 813 to decrease a possibility of the first electrode 813 being spaced from the lamp ground member 840.

### Method for Assembling a Backlight Assembly

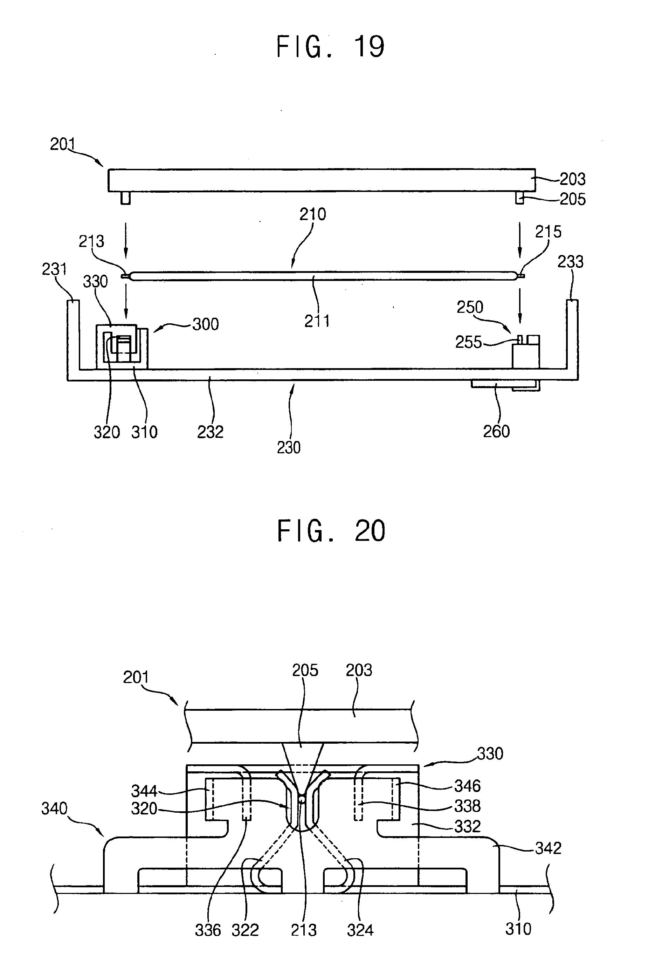

FIG. 19 is a side view illustrating a method for assembling a backlight assembly according to an example embodiment of the present invention. FIG. 20 is a side view illustrating a combination of lamp electrodes with a lamp ground member.

Referring to FIGS. 19 and 20, in assembling the backlight assembly, firstly, the lamp ground member 300 is disposed at a first side of the bottom plate 232 of the receiving container 230, and the lamp sockets 250 are disposed at a second side of the bottom plate 232 corresponding to the first side. The first side corresponds to the first side wall 231 of the receiving container 230, and the second side corresponds to the second side 233 of the receiving container 230.

The lamp ground member 300 includes one part, and includes a ground plate 310, the electrode ground portions 320 protruded from the ground plate 310 and having a claw shape, and the opening control portions 330 preventing the electrode ground portions 320 from being excessively opened. In addition, the lamp sockets 250 are electrically connected to the power supplying substrate 260 supplying the lamp driving power to the plurality of lamps 210 emitting the light.

Then, the first and second electrodes 21 3 and 215 that are formed at opposite sides of the lamp bodies 211 are disposed on the electrode ground portions 320 and the lamp sockets 250. In this case, the power supplying portions 255 fixing the second electrodes 215 with the electrode ground portions 320 are formed on the lamp sockets 250. For example, the second electrodes 21 5 are disposed on the power applying portions 255.

Finally, the first and second electrodes 213 and 215 are pressurized by the pressurizing device 201 at the same time, so that the first and second electrodes 213 and 215 are electrically connected and fixed to the electrode ground portions 320 and the power supplying portions 255. In this case, the electrode ground members 320 and the power supplying members 255 may have predetermined shapes to automatically fix the first and second electrodes 213 and 215 using the pressurizing device 201.

The pressurizing device 201 is combined with a supporting bar 203, and has electrode pressurizing portions 205 having a shape opposite to the first and second fixing portions 322 and 324 of the electrode ground portion 320. The electrode pressurizing portions 205 make contact with the first electrode 213.

Thus, the pressurizing device 201 requires the number of the electrode pressurizing portions 205 corresponding to the number of the first and second electrodes 213 and 21 5, to fix the first and second electrodes at the same time. In addition, the first and second electrodes 213 and 215 are formed at opposite sides of the lamps 210, so that the supporting bar 203 has substantially the same area as the lamps 210.

The electrode pressurizing portion 205 substantially makes contact with the first electrode 213, and may include an insulating material to prevent electric malfunction. The pressurizing device 201 basically includes a control device (not shown) to control the pressurizing device 201.

In the backlight assembly according to the present example embodiment, the lamps 210 are automatically combined with the first and second electrodes 213 and 215, so that manufacturing time and manufacturing costs may be decreased.

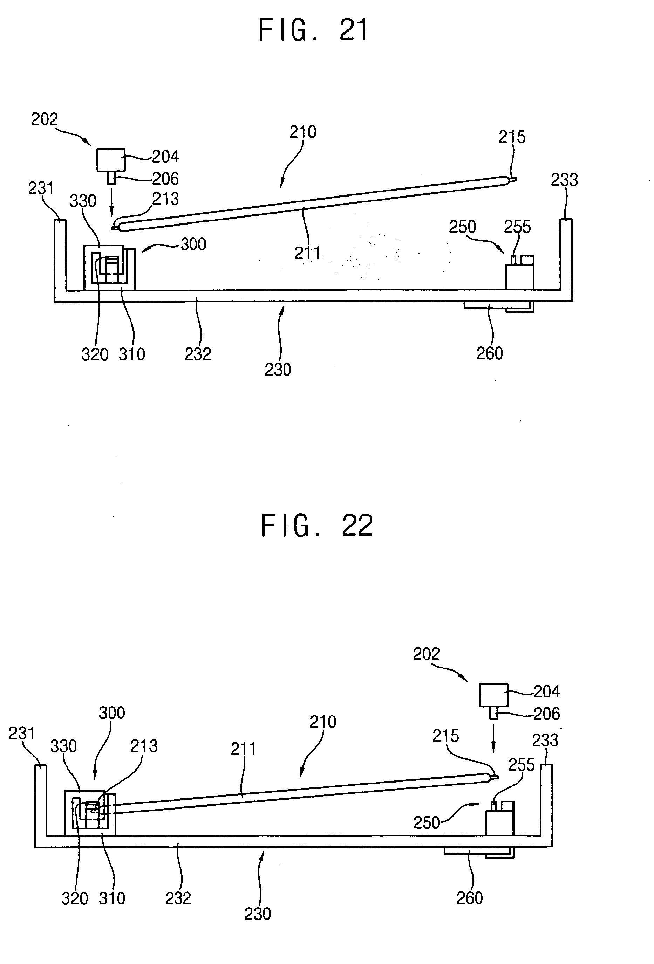

FIGS. 21 and 22 are side views illustrating a method for assembling a backlight assembly according to another example embodiment of the present invention.

The method for assembling the backlight assembly according to the present example embodiment is substantially the same as the method according to the previous example embodiment in FIGS. 19 and 20, except for an order in which the first and second electrodes 21 3 and 215 of each of the lamps 210 are connected to the electrode ground portion 320 and the power supplying portion 255.

Referring to FIGS. 21 and 22, firstly, the first electrodes 213 of the lamps 210 are electrically connected and fixed to the electrode ground portions 320 of the lamp ground member 300 by the pressurizing device 202.

Then, the second electrodes 215 of the lamps 210 are electrically connected and fixed to the power supplying portions 255 of the lamp sockets 250 by the pressurizing device 202. Accordingly, the pressurizing device 202 may include the electrode pressurizing portions 206 the number of which corresponds to at least one of the first and second electrodes 213 and 215. In addition, the pressurizing device 202 may include the supporting bar 204 corresponding one end of the lamps 210.

Accordingly, the first and second electrodes 213 and 215 of the lamps 210 are fixed at different times, so that the size of the pressurizing device 202 may be decreased and the number of parts of the pressurizing device 202 may be decreased. Thus, an area necessary for the device to assemble the lamps 210 of the backlight assembly may be decreased.

Alternatively, firstly, the second electrodes 215 of the lamps 210 are electrically connected and fixed to the power supplying portions 255. Then, the first electrodes 21 3 of the lamps 210 may be electrically connected and fixed to the electrode ground portions 320 with the difference in time.

According to the present invention, an electrode of each of a plurality of lamps is grounded to a receiving container by a lamp ground member. Thus, parts such as a lamp holder or a lamp socket grounding the electrode of the each of the lamps, a printed circuit board (PCB) (inverter slave), a connector connecting the electrode to the PCB and so on, may be omitted. Accordingly, the number of parts of a backlight assembly may be decreased.

In addition, an electrode ground portion of the lamp ground member has a Y-shape or includes a fixing groove on which the electrode is disposed without insertion force. Thus, each of the lamps may be automatically combined with the receiving container more efficiently.

In addition, the electrode ground portion is opened and is restored by electric force, so that first electrodes of the lamps may be automatically grounded.

Having described the example embodiments of the present invention and its advantage, it is noted that various changes, substitutions and alterations can be made herein without departing from the spirit and scope of the invention as defined by appended claims.

## Claims

1. A backlight assembly comprising:
a plurality of lamps each including a lamp body,
first and second electrodes respectively formed at end portions of the lamp body;
a receiving container including a bottom plate over which the lamps are disposed,
a side wall extending from the bottom plate to form a receiving space; and
a lamp ground member including a ground plate grounded to the bottom plate, and
a plurality of electrode ground portions protruded from the ground plate and making contact with the first electrode.

2. The backlight assembly of claim 1, wherein the electrode ground portions comprises:
a first fixing portion extending from the ground plate and making contact with a first side of the first electrode; and
a second fixing portion extending from the ground plate and making contact with a second side of the first electrode, the second side being opposite to the first side.

3. The backlight assembly of claim 2, wherein the first fixing portion is spaced apart from the second fixing portion along longitudinal and width directions of the ground plate.

4. The backlight assembly of claim 3, wherein the first and second fixing portions are respectively formed via incising a portion of the ground plate and curving the portion of the ground plate to an upper direction.

5. The backlight assembly of claim 3, wherein the first and second fixing portions are disposed to form a Y-shape when viewed from the width direction, and the first and second fixing portions are disposed to form an '11' shape when viewed from the longitudinal direction.

6. The backlight assembly of claim 2, wherein the first fixing portion becomes more spaced apart from the second fixing portion according as the first electrode becomes close to the ground plate or distant from the ground plate.

7. The backlight assembly of claim 2, wherein the ground plate comprises:
an upper portion facing the bottom plate and having the electrode ground portions formed on the upper portion; and
a side portion extending from an edge of the upper portion and making contact with the bottom plate.

8. The backlight assembly of claim 7, wherein guide openings are formed through an edge at which the upper portion and the side portion intersect with each other, and end portions of the lamps respectively corresponding to the electrode ground portions are respectively disposed through the guide openings.

9. The backlight assembly of claim 2, wherein the lamp ground member further comprises an opening control portion extending from the ground plate to outside of the first and second fixing portions, to prevent a gap between the first and second fixing portions from being excessively opened.

10. The backlight assembly of claim 9, wherein the opening control portion comprises:
a first opening control portion extending from the ground plate, and disposed outside of the first fixing portion; and
a second opening control portion extending from the ground plate, and facing the first opening control portion, the first and second fixing portions being disposed between the first and second opening control portions.

11. The backlight assembly of claim 10, wherein the opening control portion further comprises a supporting portion extending from an edge area along the width direction of the ground plate to face the first electrode of the lamp, and the first and second opening control portions respectively extend from opposite end portions of the supporting portion.

12. The backlight assembly of claim 10, wherein the opening control portion further comprises:
a supporting portion extending from an edge area along the width direction of the ground plate to face the first electrode of the lamp; and
an upper plate extending substantially parallel with the ground plate from an upper edge of the supporting portion, and having a groove exposing the electrode ground portion, the first and second opening control portions extending from an edge of the exposing groove.

13. The backlight assembly of claim 9, wherein the opening control portion protrudes from the ground plate to enclose the electrode ground portion.

14. The backlight assembly of claim 9, wherein the lamp ground member further comprises an electrode guide portion protruded from the ground plate to guide the first electrode to a gap between the first and second fixing portions.

15. The backlight assembly of claim 14, wherein the electrode guide portion comprises:
a supporting plate protruded from an edge area along the width direction of the supporting plate, and having a guide groove formed in the supporting plate to guide the first electrode;
a first protrusion extending from the supporting plate to outside of the first opening control portion; and
a second protrusion extending from the supporting plate to outside of the second opening control portion.

16. The backlight assembly of claim 1, wherein the electrode ground portion is formed via incising a portion of the ground plate and curving the portion of the ground plate to an upper direction, and a supporting groove, in which the first electrode is disposed, is formed at an upper edge of the electrode ground portion.

17. The backlight assembly of claim 16, further comprising a side cover covering the lamp ground member and having protrusions that are respectively combined with the supporting grooves and constrain the first electrode.

18. The backlight assembly of claim 17, wherein the side cover comprises:
a guide plate having interference prevention grooves to prevent interference with the lamps; and
an upper plate extending from the guide plate to face the bottom plate, the protrusions being formed beneath the upper plate.

19. The backlight assembly of claim 1, further comprising:
a power supplying substrate supplying lamp driving power to the second electrode; and
a lamp holder combined with the second electrode and electrically connecting the second electrode with the power supplying substrate.

20. A method for assembling a backlight assembly comprising:
grounding a lamp ground member at a first side of a bottom plate of a bottom chassis, the lamp ground member having a ground plate, electrode ground portions protruded from the ground plate and opening control portions preventing the electrode ground portions from being excessively opened;
disposing lamp holders at a second side of the bottom plate corresponding to the first side of the bottom plate;
respectively disposing first and second electrodes that are respectively formed at opposite ends of lamp bodies, on the electrode ground portions and the lamp holders; and
electrically connecting and fixing the first and second electrodes to the electrode ground portions and the lamp holders, respectively, via pressurizing the first and second electrodes by using a pressurizing device.

21. The method of claim 20, wherein the first and second electrodes are electrically connected and fixed to the electrode ground portions and the lamp holders, respectively, via pressurizing the first and second electrodes at the same time.

22. The method of claim 20, wherein the first and second electrodes are electrically connected and fixed to the electrode ground portions and the lamp holders, respectively, via pressurizing the first and second electrodes at different times.
